# EUROPÄISCHE PATENTANMELDUNG

(11) **EP 1 241 063 A2**
(43) Veröffentlichungstag der Anmeldung: **18.09.2002**
(21) Anmeldenummer: 02003415.3
(22) Anmeldetag: 14.02.2002
(51) Int. Cl.: B60T 1/087, B60T 10/02

(54) **Automatgetriebe mit einem Hydrauliksystem**

(30) Priorität: 20.02.2001 DE 10107854
(71) Anmelder: ZF FRIEDRICHSHAFEN Aktiengesellschaft, 88038 Friedrichshafen (DE)
(72) Erfinder: Weber, Michael, 88289 Waldburg (DE); Fessler, Bernd, 88079 Kressbronn (DE)

(57) **Zusammenfassung**

Es wird ein Automatgetriebe mit einem Hydrauliksystem (1) zum Ansteuern und Regeln eines hydrodynamischen Retarders (6), der einen zwischen einem Rotor (7) und einem Stator (8) ausgebildeten Retarderraum (9) aufweist, beschrieben. Ein Füllgrad des Retarderraumes (9) ist in Abhängigkeit einer Position einer mit dem Retarderraum (9) in Verbindung stehenden hydraulischen Übersetzung (10, 11, 12) variierbar.

## Beschreibung

Die Erfindung betrifft ein Automatgetriebe mit einem Hydrauliksystem nach der im Oberbegriff des Patentanspruches 1 näher definierten Art.

Aus der Praxis sind Automatgetriebe für Fahrzeuge, insbesondere für Nutzkraftwagen und Stadtbusse, bekannt, die einen Retarder aufweisen, welcher beispielsweise als Primärretarder zwischen einem hydrodynamischen Wandler und dem Hauptgetriebe in einem Antriebsstrang des Fahrzeugs angeordnet ist. Für die Ansteuerung eines hydrodynamischen Retarders werden pneumatische Systeme verwendet, welche über ein im Fahrzeug vorhandenes Druckluftsystem mit Druckluft versorgt werden.

Darüber hinaus ist es bekannt, die Ansteuerung des Retarders über ein Hydrauliksystem in Kombination mit einem pneumatischen System durchzuführen. Bedingt durch die konstruktiven Gegebenheiten des Retarders kann dieser aufgrund seines relativ hohen Füllvolumens nicht alleine über ein bekanntes Hydrauliksystem angesteuert werden, da ein im Bremsbetrieb bzw. bei einer Bremsanforderung erforderliches Ansprechverhalten mit einer getriebeinternen Pumpe aufgrund einer Dynamik, d.h. einem Verhältnis von Füllzeit und Pumpenförderleistung, nicht ausreichend schnell ist. Ein Zuschalten des Retarders in der erforderlichen Zeit wäre somit nicht durchführbar. Aus diesem Grund wird bei einer hydraulischen Ansteuerung des hydrodynamischen Retarders ein Druckspeicher angekoppelt, der pneumatisch über ein zusätzliches Pneumatiksystem angesteuert wird.

Bei einer alleinig hydraulischen Ansteuerung des Retarders ist bei den aus der Praxis bekannten Ausführungsformen eine Erhöhung der Pumpenförderleistung erforderlich, was nachteilhafterweise zu einer Reduzierung des Gesamtwirkungsgrades führt. Insbesondere muß zur Erhöhung der Pumpenförderleistung eine Pumpe größer dimensioniert werden, was zu einem höheren Gesamtgewicht des Getriebes führt und auch wesentlich mehr Bauraum erfordert.

Andererseits erfordert eine pneumatisch unterstützte hydraulische Ansteuerung nachteilhafterweise einen zusätzlichen Druckspeicher und einen Luftanschluß zu einem Druckluftsystem des Fahrzeuges. Dies zieht einen erheblichen Applikationsaufwand nach sich, der sich in den Systemkosten eines Automatgetriebes niederschlägt. Darüber hinaus ergibt sich bei einer pneumatisch unterstützten hydraulischen Ansteuerung ein unterschiedliches dynamisches Verhalten in Abhängigkeit eines Füllgrades des hydraulischen Druckspeichers, wodurch die Steuerung und Regelung erheblich erschwert wird.

Im Falle einer alleinig pneumatischen Ansteuerung eines hydrodynamischen Retarders muß ein hydraulischer Kreislauf des Retarders vom Hauptgetriebe luftdicht abgedichtet werden, so daß ein hoher Dichtaufwand betrieben werden muß, der auch zu einer Erhöhung der Herstellkosten führt.

Aufgabe der vorliegenden Erfindung ist es, ein Automatgetriebe mit einem Hydrauliksystem zur Verfügung zu stellen, mit welchem ein hydrodynamischer Retarder rein hydraulisch ansteuer- und regelbar ist, und das nur geringe Herstellkosten verursacht.

Erfindungsgemäß wird diese Aufgabe mit einem Automatgetriebe gemäß den Merkmalen des Patentanspruches 1 gelöst.

Mit dem erfindungsgemäßen Automatgetriebe mit einem Hydrauliksystem zum Ansteuern und Regeln eines hydrodynamischen Retarders, der einen zwischen einem Rotor und einem Stator ausgebildeten Retarderraum aufweist, wird in vorteilhafter Weise ein Füllgrad des Retarderraums in Abhängigkeit einer Position einer mit der dem Retarderraum in Verbindung stehenden hydraulischen Übersetzung variiert.

Bei der erfindungsgemäßen Ausgestaltung des Hydrauliksystems mit einer hydraulischen Übersetzung, die es erlaubt, mit einer geringen hydraulischen Ansteuermenge eine große hydraulische Menge zu verschieben, wird mit einfachen Mitteln eine rein hydraulische Ansteuerung und Regelung eines hydrodynamischen Retarders verwirklicht, ohne einen separaten Druckspeicher vorsehen zu müssen.

Darüber hinaus kann eine Druckquelle bzw. eine Pumpe des Automatgetriebes kleiner dimensioniert werden als bei einer rein hydraulischen Ansteuerung und Regelung mit einem bekannten Hydrauliksystem, wodurch mit dem vorgeschlagenen Hydrauliksystem eine beträchtliche Einsparung an Bauraum erzielt wird.

In einer sehr vorteilhaften Ausgestaltung der Erfindung kann vorgesehen sein, daß die hydraulische Übersetzung mit einem Stufenkolben ausgebildet ist, der einen ersten Kolbenraum mit größerer Grundfläche und einen zweiten Kolbenraum mit kleinerer Grundfläche begrenzt, wobei der erste Kolbenraum mit dem Retarderraum verbunden ist und vorzugsweise an die dem Retarderraum abgewandte Seite des Rotors grenzt. Auf diese Weise kann die hydraulische Übersetzung einfach und kostengünstig realisiert werden.

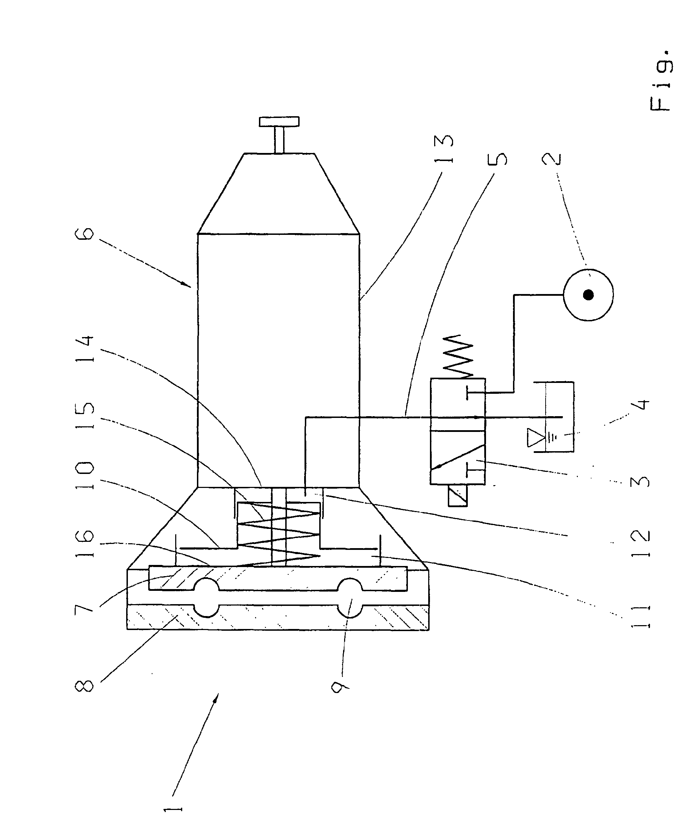

Weitere Vorteile und Weiterbildungen der Erfindung ergeben sich aus den Patentansprüchen und den anhand der Zeichnung prinzipmäßig beschriebenen Ausführungsbeispielen.

Die einzige Figur der Zeichnung zeigt einen hydrodynamischen Retarder und einen Teil eines Hydrauliksystems eines Automatgetriebes, über welchen ein Stufenkolben des Retarders ansteuer- und/oder regelbar ist.

Der in der Figur dargestellte Teil eines Hydrauliksystems 1 weist eine Druckquelle in Form einer Pumpe 2, ein Ventil 3 und ein Ölreservoir 4 auf. Das Hydrauliksystem 1 steht über eine Leitung 5 mit einem hydrodynamischen Retarder 6 in Verbindung. Der Retarder 6 weist einen zwischen einem Rotor 7 und einem Stator 8 ausgebildeten Retarderraum 9 auf. Auf der dem Retarderraum 9 abgewandten Seite des Rotors 7 ist ein in axialer Richtung des Retarders 6 verschiebbar angeordneter Stufenkolben 10 vorgesehen, welcher einen ersten Kolbenraum 11 mit größerer Grundfläche und einen zweiten Kolbenraum 12 mit kleinerer Grundfläche begrenzt.

Der zweite Kolbenraum 12 ist über die Leitung 5 mit dem Hydrauliksystem 1 verbunden, während der erste Kolbenraum 11 eine Verbindung mit dem Retarderraum 9 aufweist. Der Stufenkolben 10 bildet zusammen mit den Kolbenräumen 11 und 12 eine hydraulische Übersetzung, über die der Füllgrad des Retarderraumes 9 in Abhängigkeit einer axialen Position des Stufenkolbens 10 variierbar ist.

Beim Betätigen des hydrodynamischen Retarders 6 wird eine der Bremsstellung entsprechend große Ölmenge aus dem ersten Kolbenraum 11 in den Retarderraum 9 eingebracht, wobei über den Füllgrad des Retarders 6 bzw. des Retarderraumes 9 das Bremsmoment gesteuert und geregelt wird. Der Rotor 7 befindet sich im Betrieb des Automatgetriebes im Leistungsfluß, während der Stator 8 fest mit einem Retardergehäuse 13 verbunden ist. Der drehende Rotor 7 nimmt das Öl über nicht dargestellte Schaufelräder mit, wobei sich das Öl am Stator 8 abstützt und so eine Bremswirkung auf die Rotorwelle erzeugt.

Im nicht betätigten Zustand des Retarders 6 befindet sich der Stufenkolben 10 in Anlage an einem dem Rotor 7 abgewandten ersten Anschlag 14, der vorliegend ein Bestandteil des Retardergehäuses 13 ist. Dabei ist der zweite Kolbenraum 12 bzw. dessen Volumeninhalt nahezu auf Null reduziert, und ein in dem zweiten Kolbenraum 12 vorherrschender Druck entspricht nahezu einem Umgebungsdruck des Automatgetriebes.

Liegt ein entsprechendes Signal zum Aufbau eines Bremsmomentes in dem Retarder 6 vor, wird das Ventil 3 derart angesteuert, daß eine Verbindung zwischen der Pumpe 2 und dem zweiten Kolbenraum 12 über das Ventil 3 hergestellt wird. Über die Pumpe 2 wird ein Systemdruck des Automatgetriebes bzw. des Hydrauliksystems 1 zur Verfügung gestellt, welcher eine Verschiebung des Stufenkolbens 10 in Richtung des Rotors 7 bewirkt. Diese Verschiebung führt zu einer Verringerung des Volumens des ersten Kolbenraumes 11 und gleichzeitig zu einer Erhöhung des Füllgrades des Retarderraumes 9.

Aufgrund des Flächenverhältnisses der Grundflächen des ersten Kolbenraumes 11 und des zweiten Kolbenraumes 12 ist zu einer Befüllung des Retarderraumes 9 eine diesem Verhältnis entsprechende geringere Ölmenge erforderlich, womit die Pumpe 2 entsprechend klein dimensioniert werden kann. Der sich in dem zweiten Kolbenraum 12 aufbauende Druck zur Verschiebung des Stufenkolbens 10 muß neben den durch die Flüssigkeitsreibung in der Verbindung zwischen dem ersten Kolbenraum 11 und dem Retarderraum 9 verursachten Reibungskräften zusätzlich eine Federkraft einer im ersten Kolbenraum 11 angeordneten Rückstellfeder 15 und einen in dem ersten Kolbenraum 11 vorliegenden Druck überwinden.

Das Ventil 3 ist in der gezeigten Ausführung als Schaltventil ausgebildet. Während der Betätigung des Retarders 6 wird der Stufenkolben 10 bis zu einem zweiten Anschlag 16 verschoben, so daß der Füllgrad des Retarderraumes 9 durch die Verschiebung des Stufenkolbens 10 bis zu einem bestimmten Wert gesteuert angehoben wird. Die Regelung des Füllgrades des Retarderraumes 9 wird dabei über ein nicht näher dargestelltes Proportionaldruckregelventil durchgeführt, welches mit dem Hydrauliksystem 1 und direkt mit dem Retarderraum 9 verbunden ist. Das bedeutet, daß über den Stufenkolben 10 zunächst eine gesteuerte Schnellbefüllung des Retarderraumes 9 vorgenommen wird und eine weitere Einstellung bzw. Regelung des Bremsmomentes des Retarders 6 über das Proportionaldruckregelventil durchgeführt wird. Der Retarderraum 9 und das Hydrauliksystem 1 wiesen somit einen gemeinsamen Ölkreislauf auf.

Alternativ hierzu kann es vorgesehen sein, das Ventil 3 als ein Regelventil auszubilden, und den Stufenkolben 10 über dieses zu steuern und zu regeln. Dabei ist das Verschiebevolumen des Stufenkolbens 10 bzw. das Volumen des ersten Kolbenraumes 11 derart dimensioniert, daß der Stufenkolben 10 nicht den zweiten mechanischen Anschlag 16 erreicht, sondern sich während der Betätigung des Retarders 6 in Regelstellung befindet, wobei er in Abhängigkeit eines angeforderten Bremsmomentes zwischen dem ersten Anschlag 14 und dem zweiten Anschlag 16 pendelt bzw. in einer bestimmten Position zwischen den beiden Anschlägen 14 und 16 gehalten wird. Dabei kann auf eine zusätzliche Regelung des Füllgrades des Retarderraumes 9 über ein Proportionaldruckregelventil verzichtet werden. Die Regelung und Ansteuerung des Retarders 6 bzw. des Füllgrades des Retarderraumes 9 erfolgt auch bei getrenntem Ölhaushalt des Retarders 6 von dem Ölhaushalt des Automatgetriebes bzw. dem Hydrauliksystems 1 allein über das Ventil 3.

Bei beiden Varianten wird beim Öffnen des Retarders 6 über das Ventil 3 eine Verbindung zwischen dem zweiten Kolbenraum 12 und dem Ölreservoir 4 hergestellt, so daß der Stufenkolben 10 über die Rückstellfeder 15 in Richtung des ersten Anschlages 14 verschoben wird. Durch die Vergrößerung des Volumens des ersten Kolbenraumes 11 entsteht im ersten Kolbenraum 11 eine Sogwirkung, die eine Entleerung des Retarderraumes 9 unterstützt.

Die vorliegende Erfindung ist jeweils für einen motorseitig angeordneten Primärretarder oder auch für einen getriebeseitig im Triebstrang eines Fahrzeuges angeordneten Sekundärretarder anwendbar. So ergibt sich beispielsweise für einen Primärretarder bei der Betätigung des Retarders 6 ein exakt und schnell einstellbares gangabhängiges Bremsmoment an Rädern des Fahrzeugs, das mit kleiner werdendem Gang proportional mit der Übersetzung steigt. Damit sind Primärretarder, die mit dem erfindungsgemäßen Hydrauliksystem 1 bzw. dem erfindungsgemäßen Stufenkolben 10 betrieben werden, schon bei niedrigen Fahrgeschwindigkeiten effektiv und erzeugen relativ hohe Bremsmomente an den Antriebsrädern.

### Bezugszeichen

- 1: Hydrauliksystem
- 2: Druckquelle, Pumpe
- 3: Ventil, Schaltventil, Regelventil
- 4: Ölreservoir
- 5: Leitung
- 6: hydrodynamischer Retarder
- 7: Rotor
- 8: Stator
- 9: Retarderraum
- 10: Stufenkolben
- 11: erster Kolbenraum
- 12: zweiter Kolbenraum
- 13: Retardergehäuse
- 14: erster Anschlag
- 15: Rückstellfeder
- 16: zweiter Anschlag

## Patentansprüche

1. Automatgetriebe mit einem Hydrauliksystem (1) zum Ansteuern und Regeln eines hydrodynamischen Retarders (6), der einen zwischen einem Rotor (7) und einem Stator (8) ausgebildeten Retarderraum (9) aufweist, **dadurch gekennzeichnet, daß** ein Füllgrad des Retarderraums (9) in Abhängigkeit einer Position einer mit dem Retarderraum (9) in Verbindung stehenden hydraulischen Übersetzung (10, 11, 12) variierbar ist.

2. Automatgetriebe nach Anspruch 1, **dadurch gekennzeichnet, daß** die hydraulische Übersetzung mit einem Stufenkolben (10) ausgebildet ist, der einen ersten Kolbenraum (11) mit größerer Grundfläche und einen zweiten Kolbenraum (12) mit kleinerer Grundfläche begrenzt, wobei der erste Kolbenraum (11) mit dem Retarderraum (9) verbunden ist.

3. Automatgetriebe nach Anspruch 2, **dadurch gekennzeichnet, daß** der erste Kolbenraum (11) an die dem Retarderraum (9) abgewandte Seite des Rotors (7) grenzt.

4. Automatgetriebe nach Anspruch 2 oder 3, **dadurch gekennzeichnet, daß** zum Reduzieren des Füllgrades des Retarderraumes (9) eine auf den Stufenkolben (10) wirkende Rückstellfeder (15) vorgesehen ist.

5. Automatgetriebe nach einem der Ansprüche 2 bis 4, **dadurch gekennzeichnet, daß** der erste Kolbenraum (11) als hydraulischer Speicher ausgebildet ist und der Stufenkolben (10) zur Einstellung des Füllgrades des Retarderraumes (9) bis zu einem Anschlag verschiebbar ist, der im Bereich des Rotors (7) angeordnet ist.

6. Automatgetriebe nach einem der Ansprüche 2 bis 5, **dadurch gekennzeichnet, daß** der zweite Kolbenraum (12) über ein Schaltventil (3) angesteuert wird, welches mit dem Hydrauliksystem (1) verbunden ist.

7. Automatgetriebe nach einem der Ansprüche 1 bis 6, **dadurch gekennzeichnet, daß** der Füllgrad des Retarderraumes (9) über ein Proportionaldruckregelventil geregelt wird, daß mit dem Hydrauliksystem (1) verbunden ist.

8. Automatgetriebe nach einem der Ansprüche 1 bis 7, **dadurch gekennzeichnet, daß** der Retarderraum (9) und das Hydrauliksystem (1) einen gemeinsamen Ölkreislauf aufweisen.

9. Automatgetriebe nach einem der Ansprüche 2 bis 5, **dadurch gekennzeichnet, daß** der Stufenkolben (10) bei einer Steuerung und Regelung des Füllgrades des Retarderraumes (9) in einer Position zwischen einem ersten Anschlag (14) und einem zweiten Anschlag (16) haltbar ist.

10. Automatgetriebe nach Anspruch 9, **dadurch gekennzeichnet, daß** der zweite Kolbenraum (12) über ein Regelventil (3) angesteuert und geregelt wird, welches mit dem Hydrauliksystem (1) verbunden ist.

11. Automatgetriebe nach Anspruch 9 oder 10, **dadurch gekennzeichnet, daß** das Hydrauliksystem (1) und der Retarderraum (9) getrennte Ölkreisläufe aufweisen.
